(19) Europäisches Patentamt
European Patent Office
Office européen des brevets

(11) EP 0 737 850 A2

(12) **EUROPÄISCHE PATENTANMELDUNG**

(43) Veröffentlichungstag:
16.10.1996 Patentblatt 1996/42

(51) Int. Cl.⁶: **G01J 3/50**

(21) Anmeldenummer: 96105071.3

(22) Anmeldetag: 29.03.1996

(84) Benannte Vertragsstaaten:
AT CH DE ES FR GB IT LI NL PT

(30) Priorität: 15.04.1995 DE 19514199

(71) Anmelder: JENOPTIK Aktiengesellschaft
D-07743 Jena (DE)

(72) Erfinder:
• Görlich, Steffen
07743 Jena (DE)
• Morgenstern, Thomas
07747 Jena (DE)

(54) **Anordnung zur Messung von Farben nicht selbstleuchtender Objekte**

(57) Die Erfindung betrifft eine Anordnung zur Messung von Farben nicht selbstleuchtender Objekte.
Erfindungsgemäß wird die Aufgabe, eine kostengünstige Möglichkeit zur Farbmessung mit farbmetrischer Bewertung in standardisierten Farbnormen zu finden, dadurch gelöst, daß mindestens drei spektral unterschiedliche Lichtquellen, die den sichtbaren Spektralbereich lückenlos ausfüllen, in glanzunterdrückender Geometrie zum Empfangskanal angeordnet sind und im Empfangskanal, synchronisiert mit den Lichtquellen, nach dem trichomatischen Prinzip drei Remissionswerte aufgenommen werden, die jeweils über ein lineares Gleichungssystem verarbeitet werden, dessen Koeffizienten durch Anlernen mit normgerecht vermessenen, bekannten Farbmustern ermittelt werden.
Für den Anlernprozeß sind vorteilhaft die Methode der mehrfachen linearen Regression oder neuronale Netze einsetzbar.

Fig. 5

EP 0 737 850 A2

**Beschreibung**

Die Erfindung betrifft eine Anordnung zur Messung von Farben nicht selbstleuchtender Objekte.

Da Farbe keine physikalische Größe, sondern eine Sinnempfindung und damit unterschiedlichen subjektiven Bewertungskriterien unterworfen ist, erfolgt die Messung von Farben nach den Vorschriften der CIE (Committee international de l'eclairage), die in dieser oder abgewandelter Form in den nationalen und internationalen Standards (z.B. DIN, ASI, BSI) festgeschrieben sind. Diese Standards basieren auf Untersuchungen an einer Vielzahl von farbig normalsichtigen Probanden, deren Durchschnittswerte die sogenannten Normspektralfunktionen für verschiedene Betrachtungswinkel darstellen. Die Farbmessung selbst erfolgt schließlich durch die Ermittlung des Faltungsintegrals im sichtbaren Spektralbereich über die spektrale Verteilung der Intensität der Beleuchtungsquelle, die spektrale Remissionsfunktion des Objektes und die jeweiligen Normspektralfunktionen.

Das Dreibereichsverfahren beruht auf dem trichromatischen Prinzip, welches besagt, daß ein Farbeindruck durch drei Farbwerte bestimmt wird. Diese Farbwerte sind Integrale über bestimmte spektrale Bereiche. Geräte, die nach diesem Prinzip arbeiten, sind gegenüber spektral auflösenden Geräten kostengünstiger, haben aber u.a. den Nachteil, den Effekt der Metamerie nicht erkennen zu können. Sie basieren entweder auf der spektralen Zerlegung des Lichtes mit Hilfe von drei Filtern oder auf dem Einsatz von mehreren Strahlungsquellen, die eine unterschiedliche spektrale Verteilung aufweisen.

Aus der Patentschrift EP 0256970 ist bekannt, mehrere Halbleiterstrahlungsquellen zur Beleuchtung der Probe zu verwenden, wobei diese, impulsweise angesteuert, im blauen, roten und grünen Spektralbereich senden und durch eine optische Anordnung, bestehend aus einem Linsensystem und zwei dichroitischen Spiegeln, auf die Probe fokussiert werden. Nachteilig bei dieser Anordnung ist, daß Filter mit einer guten Anpassung für eine normgerechte Farbbewertung kostenaufwendig hergestellt werden müssen.

Weiterhin ist aus der Schrift WO 94/25849 bekannt, zur Führung des Beleuchtungslichtes sogenannte Konzentratoren zu verwenden, die das Licht der Halbleiterstrahlungsquellen auf die Probenoberfläche bringen. Hierbei wirkt sich die Tatsache einer relativ ungleichmäßigen Beleuchtung der Probe sowie die starke Abstandsabhängigkeit aufgrund der hohen Ausgangsdivergenz der Konzentratoren nachteilig aus. Weiterhin ist aus dieser Schrift bekannt, das remittierte Licht im Falle einer Einstrahlung parallel zur Normalen der Probe, unter einem bestimmten Winkel mit Hilfe eines lichtleitenden Bauelementes zum Empfänger zu leiten. Schließlich ist aus der Schrift US 5 137 364 bekannt, mehrere unterschiedlich empfindliche Empfänger mit mehreren, bezüglich der Wellenlänge unterschiedlich emittierenden Strahlern zu kombinieren, um damit eine einfache Spektralmeßapparatur zu bilden. Nachteilig bei dieser Anordnung ist der erforderliche Aufwand, um die Farbbewertung annähernd normgerecht durchführen zu können. Weiterhin ist aus dieser Schrift bekannt, die Sende und Empfangsbauelemente durch eine Heiz- und Kühlvorrichtung zu temperieren, um eine Beeinflussung der Messung durch thermische Effekte zu minimieren.

Stand der Technik im Bereich der Auswertung der Meßergebnisse ist, daß je nach Anwendungszweck Transformationen in verschiedene Farbkoordinatensysteme realisiert werden, die eine zugeschnittene Auswertung von Helligkeiten, Farbtönen, Farbsättigungen und deren Toleranzen günstig unterstützen (siehe z.B. H.G. Völz: Industrielle Farbprüfung, VCH Verlagsgesellschaft Weinheim, 1990).

Der Erfindung liegt die Aufgabe zugrunde, eine kostengünstige Möglichkeit zur Messung von Farben zu finden, die eine farbmetrische Bewertung in standardisierten Farbnormen zuläßt.

Erfindungsgemäß wird die Aufgabe bei einer Anordnung zur Messung von Farben nichtselbstleuchtender Objekte mit mindestens drei sequentiell betriebenen Lichtquellen, die unterschiedliche spektrale Abstrahlungscharakteristik im sichtbaren Spektralbereich aufweisen und deren Licht auf eine Meßoberfläche eingestrahlt wird, und einem Empfangskanal zur Messung des von der Meßoberfläche remittierten Lichtes, wobei eingestrahltes und remittiertes Licht eine glanzunterdrückende Meßgeometrie aufweisen, dadurch gelöst, daß die spektralen Abstrahlungscharakteristiken der Lichtquellen lückenlos den sichtbaren Spektralbereich ausfüllen, die Lichtquellen spektrale Verteilungsfunktionen aufweisen, die durch geeignete spektrale Verknüpfungsmaßnahmen zur Anpassung an die Normspektralfunktion geeignet sind, daß der Empfangskanal zur Aufnahme von Remissionswerten mit einer Auswerteeinheit in Verbindung steht und mit der Lichtquellenansteuerung so synchronisiert ist, daß für jeden nach dem trichromatischen Prinzip erforderlichen Farbwert mindestens ein Remissionswert aufgenommen wird, daß in der Auswerteeinheit zur Auswertung der gemessenen Remissionswerte eine Anzahl linearer Gleichungen vorhanden ist, deren Koeffizienten in einem Anlernprozeß durch die Anwendung von Farbmustern erstellt werden, wobei die von den Farbmustern bekannten, normgerecht ermittelten Farbkoordinaten mit den von den Farbmustern aufgenommenen Remissionswerten verknüpft werden und der Anlernprozeß für die einzelnen Farbkoordinaten X, Y, Z separat erfolgt.

Vorteilhaft werden dazu die spektralen Verteilungsfunktionen der Lichtquellen an die sogenannten Normspektralfunktionen des menschlichen Auges angepaßt. Das geschieht vorzugsweise durch Auswahl spektral geeigneter Lichtquellen. Bei Bedarf können das auch mehrere spektral verschiedene, zusammengeschaltete Lichtquellen in additiver Kombination für jeweils eine der Normspektralfunktionen sein. Geeignet zur Anpassung an die Normspektralfunktion ist auch die Verknüpfung von nacheinander angesteuerten Lichtquellen, indem deren Remissionswerte unterschiedlich gewichtet in verschiedene lineare Gleichungen der Auswerteeinheit eingebbar sind. Weiterhin sind Filtergläser zur Anpassung ergänzend oder auch allein einsetzbar.

Zweckmäßig zur Unterdrückung des Glanzeinflusses bei der Farbmessung ist eine optische Anordnung von Beleuchtungs- und Empfangskanal, die ein Winkelverhältnis von 45° und 0° bezüglich der Flächennormalen der Meßoberfläche beinhaltet. Als Beleuchtungskanal ist vorteilhaft ein faseroptisches Bauelement zur Führung des Lichts der verschiedenen Lichtquellen zu einem Meßfleck auf der Meßoberfläche vorhanden, wobei die Faserenden so angeordnet sind, daß das aus unterschiedlichen Faserenden austretende Licht ein und derselben Lichtquelle im Meßfleck eine homogene Ausleuchtung erzeugt. Vorzugsweise besteht das faseroptische Bauelement aus Lichtwellenleitern geringer Apertur, insbesondere < 0,17.

Es ist zweckmäßig für die Realisierung der homogenen Ausleuchtung des Meßflecks, daß das faseroptische Bauelement mindestens so viele Fasern aufweist, daß von jeder Lichtquelle mindestens drei Fasern gleichverteilt auf den Meßpunkt gerichtet sind.

Besonders vorteilhaft ist das faseroptische Bauelement ausgangsseitig in Form eines Ringes angeordnet, wobei die Faserenden von verschiedenen Lichtquellen kommender Fasern abwechselnd in wiederkehrender Folge aufgereiht sind.

Der Empfangskanal besteht zweckmäßig aus einem lichtsammelnden optischen System, im einfachsten Fall einer Linse, sowie einem Photoempfänger, wobei sich der Photoempfänger vorzugsweise im Brennpunkt des optischen Systems befindet. Der Photoempfänger wird vorteilhaft mittels Kurzschlußbetrieb linear ausgesteuert und steht mit einem nachfolgenden Operationsverstärker als Transimpedanzwandler in Verbindung, der auf einen Signalwert bei abgeschaltetem Beleuchtungskanal geklemmt ist, so daß das Umgebungslicht stets erfaßt und eliminiert wird. Zur Verbesserung der Genauigkeit der Farbmessung trägt vorteilhaft eine Durchschnittbildung bei, bei der mehrere Signalwerte des Photoempfängers bei Beleuchtung der Meßoberfläche mit derselben Lichtquelle als ein mittlerer Meßwert in das neuronale Netz der Auswerteeinheit eingehen.

Beleuchtungs- und Empfangskanal sind vorzugsweise in einem stabförmigen Meßkopf untergebracht, wobei der Meßkopf ein Hilfsmittel zur Gewährleistung des senkrechten Aufsetzens auf die Meßoberfläche besitzt, welches aus mindestens drei im gleichen Abstand zueinander um den Meßfleck des Empfangskanals angeordneten Kontakten und Stößeln besteht. Die Stößel und Kontakte lösen bei gleichmäßiger Betätigung den Meßvorgang aus oder unterbrechen ihn, wenn während der Messung eine Verkippung auftritt. Vorteilhaft kann die Verkippung akustisch angezeigt werden.

Weiterhin ist es von Vorteil, wenn die erfindungsgemäße Anordnung einen aus der Strahlung jeder Lichtquelle ausgekoppelten Referenzkanal aufweist, um Intensitätsschwankungen durch Alterungs- und Umgebungseinflüsse zu kompensieren, wobei Veränderungen des Ausgangswertes eines Referenzdetektors bei der Auswertung der Meßwerte berücksichtigt werden.

Für die Bestimmung der Koeffizienten der linearen Gleichungen in der Auswerteeinheit lassen sich vorteilhaft zwei Berechnungsverfahren im Anlernprozeß einsetzen, die Methode der mehrfachen linearen Regression, vorzugsweise die Methode der kleinsten Fehlerquadrate, oder alternativ die Berechnung eines neuronalen Netzes.

Die Bestimmung solcher Regressionskoeffizienten des Gleichungssystems bzw. der Wichtungskoeffizienten und Biaswerte im neuronalen Netz erfolgt zweckmäßig durch Anlernen von zertifizierten Farbmustern, deren Farbkoordinaten bei Normbedingungen ermittelt wurden, und Verknüpfung der zertifizierten Farbkoordinaten mit den Meßwerten.

Vorteilhaft werden unter Beibehaltung der gleichen Regressionskoeffizienten des Gleichungssystems bzw. der Wichtungskoeffizienten und Biaswerte der neuronalen Netze auch andere Meßgrößen von Meßoberflächen erfaßt, die selbst oder auf Indikatorvorlagen Farbänderungen unterworfen sind. Zweckmäßig können auch andere Gleichungskoeffizienten verwendet werden, wenn Farbänderungen von Prozessen und Größen mit nichtlinearer Abhängigkeit vermessen werden sollen. Beispiele für die sekundäre Messung nichtlinearer Farbstufung bei Primärgrößen sind die Messung von Anwesenheit und/oder Konzentration bestimmter Stoffe, pH-Wert-Messung, Temperaturmessung und Messung anderer Größen mit Farbindikation.

Die Grundidee der Erfindung besteht in der Überlegung, die komplizierte normgerechte Meßvorschrift zur Farbmessung (z.B. lt. DIN etc.) in einfacher Weise zu umgehen, ohne Einbußen in der Genauigkeit und Grunddefinition der Farbmessung zuzulassen. Erfindungsgemäß wird dies durch annähernd normgerechte Beleuchtung und Meßwertaufnahme und eine Auswertung mittels linearer Gleichungen erreicht, wobei die Ankopplung auf die Normfarbmessung über einen Anlernprozeß mit zertifiziert normgerecht vermessenen Farbmustern, z.B. mit Regressionsberechnungen oder mittels neuronaler Netze, erfolgt. Bei geeigneter Auswahl von Lichtquellen kann in der Auswerteeinheit erfindungsgemäßer Geräte stets ein auf Basis derselben Regressionsberechnungen bzw. neuronalen Netze erstelltes System linearer Gleichungen verwendet werden.

Mit der erfindungsgemäßen Anordnung ergibt sich die Möglichkeit, bei Auswahl spektral geeigneter Lichtquellen und Auswertung der Remissionswerte mittels linearer Gleichungen, deren Koeffizienten durch Anlernen von zertifizierten Farbmustern bestimmt werden, eine Bewertung der Farben von Meßoberflächen zu erhalten, die mit dem bei normgerechter Farbmessung erzielten Ergebnis vergleichbar ist, ohne daß der immense normgerechte Beleuchtungsaufwand betrieben werden muß. Die Anordnung ist dadurch in einem handlichen, kompakten Meßgerät realisierbar.

Damit ist eine annähernd normgerechte Farbmessung auch von Personen durchführbar, die mit den komplizierten Meßnormen nicht vertraut sind. Weiterhin sind mit einem derartigen Meßaufbau andere Größen, die Farbänderungen hervorrufen, meßbar. Beispielsweise können Stoffkonzentrationen, die auf Indikatorvorlagen Veränderungen des Remissionsverhaltens bewirken, durch das beschriebene Meßverfahren ermittelt werden.

Die erfindungsgemäße Anordnung soll nachstehend anhand eines Ausführungsbeispieles näher erläutert werden. Die Zeichnungen zeigen:

Fig. 1: die Normspektralfunktionen und eine spektrale Verteilungsfunktion einer blauen Lichtquelle

Fig. 2: eine erfindungsgemäße Beleuchtungseinrichtung

Fig. 3a: eine Schaltung zur Eliminierung des Umgebungslichts

Fig. 3b: die Schaltimpulsfolge zur Schaltung von Fig. 3a

Fig. 4: ein Beispiel für die erfindungsgemäße Anpassung von Lichtquellen an die Normspektralkurve des roten Spektralbereichs

Fig. 5: eine Ausgestaltungsvariante für Beleuchtungs- und Empfangskanal in einem optischen Meßkopf

Fig. 6: die Intensitätsverteilung der erfindungsgemäßen Beleuchtungseinrichtung gemäß Fig. 5.

Fig. 7: die geometrischen Verhältnisse bei einer Ausführungsform mit abgeschrägten Faserenden

Fig. 8: ein Matrizenschemata der Meßwertzuordnung der normgerecht und erfindungsgemäß ermittelten Meßwerte für Regressionsberechnung

Fig. 9: den Vergleich von mit normgerechtem Verfahren bestimmten und mittels linearer Regression ermittelten Meßwerten für eine Farbkoordinate (z.B. X) bei Vorlage von RAL-Farbmustern

Fig. 10: ein Beispiel für die Struktur eines erfindungsgemäß einsetzbaren neuronalen Netzes

Fig. 11: den Vergleich von mittels neuronalem Netz ermittelten und mit normgerechtem Verfahren bestimmten Meßwerten für eine Farbkoordinate (z.B. Y)

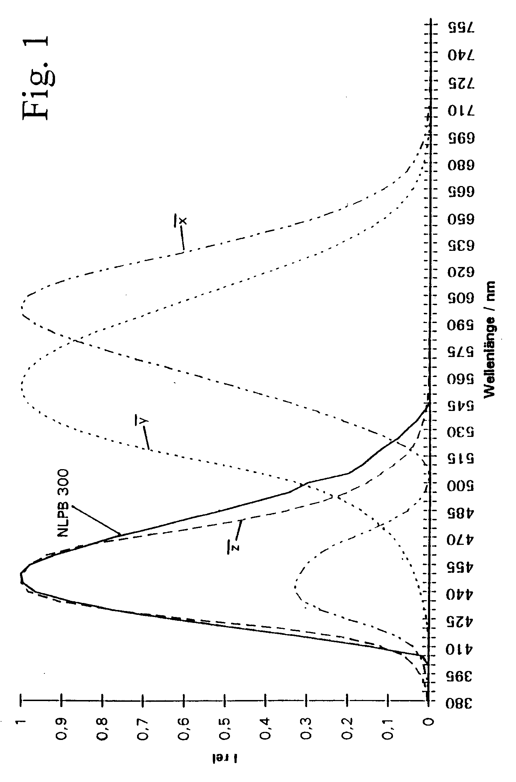

Das zu vermessende Objekt wird auf seiner Meßoberfläche 3 durch mindestens drei verschiedenfarbige Lichtquellen 1, die vorzugsweise Lumineszenzdioden 11, 12, 13 sind, sequentiell beleuchtet. Die Lichtquellen 1 emittieren im sichtbaren Bereich, wobei die spektralen Verteilungsfunktionen der Lichtquellen 1 so gestaltet sind, daß der gesamte sichtbare Spektralbereich (380...760 nm) lückenlos ausgefüllt wird und sich die spektralen Verteilungsfunktionen teilweise überlappen. Vorzugsweise sollen die Lichtquellen 1 eine den Normspektralfunktionen $\overline{x}$, $\overline{y}$, $\overline{z}$ angenäherte spektrale Verteilung ihrer Strahlungscharakteristik besitzen. In Fig. 1 ist die Normspektralfunktion $\overline{z}$ für das blaue Sehempfinden sowie beispielhaft die Emission eines blauen Strahlers (NLPB 300) dargestellt. Dessen spektrale Charakteristik stimmt annähernd mit der Normspektralfunktion $\overline{z}$ überein. Stehen derartig geeignete Strahler, zum Beispiel für die Anpassung an die Normspektralfunktion $\overline{x}$, nicht zur Verfügung, läßt sich durch eine Kombination mehrerer spektral unterschiedlich emittierender Lichtquellen 1 eine bessere Anpassung an die vorgegebenen Verteilungen erreichen. Eine weitere Möglichkeit zur spektralen Anpassung besteht in der Kombination von Lumineszenzdioden mit geeigneten Filtergläsern, die ggf. eine kantenförmige Spektralcharakteristik aufweisen.

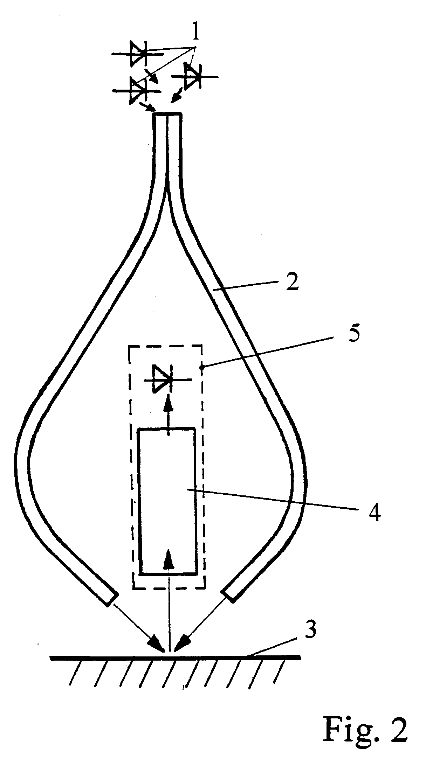

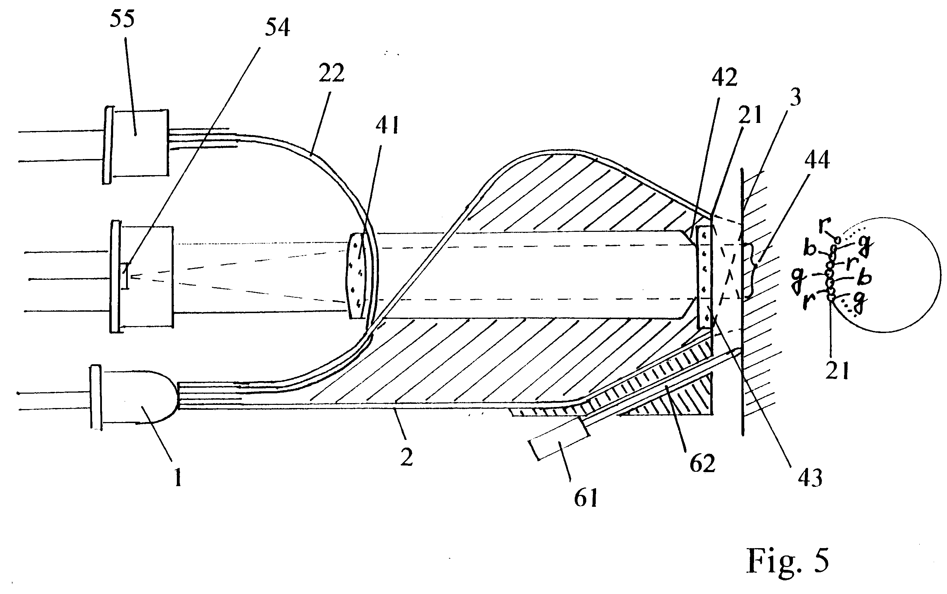

Das Licht der derart ausgewählten verschiedenfarbigen Lichtquellen 1 wird in ein lichtleitendes faseroptisches Bauelement 2 eingekoppelt. Das faseroptische Bauelement 2 ist so gestaltet, daß sich das austretende Licht in einem Gebiet der Meßoberfläche 3 derart durchmischt, daß zumindest ein Teil dieses Gebietes einen gleichmäßig beleuchteten Meßfleck 44 bildet, der vom Empfangskanal 5 erfaßt wird. Dies erfolgt beispielsweise durch eine Anordnung entsprechend Fig. 2. Die Strahlungsquellen 1 beleuchten durch das faseroptische Bauelement 2 die Meßoberfläche 3 unter einem Winkel von vorzugsweise 45°. Die Beleuchtung der Meßoberfläche 3 erfolgt von mehreren, gleichverteilten Punkten bezüglich der optischen Achse des Empfangskanals 5, vorzugsweise allseitig, mindestens jedoch für jede Lichtquelle 1 von drei Seiten. Günstig ist eine ringförmige Beleuchtung der Meßoberfläche 3 (siehe Ausführungen zu Fig. 5).

Das von der Meßoberfläche 3 parallel zur mittleren Flächennormalen remittierte Licht wird über ein optisches System 4 auf einen Empfänger abgebildet, der im sichtbaren Spektralbereich eine hinreichend große Empfindlichkeit besitzt. Mit dieser geometrischen Anordnung wird der das Meßsignal verfälschende Anteil des Glanzes weitestgehend ausgeschlossen. Das optische System 4 kann aus einer Abbildungs- und/oder einer Faseroptik bestehen. Durch geeignete Wahl des optischen Systems 4 des Empfangskanals 5 läßt sich dessen voller Öffnungswinkel günstigerweise kleiner als 10° einstellen.

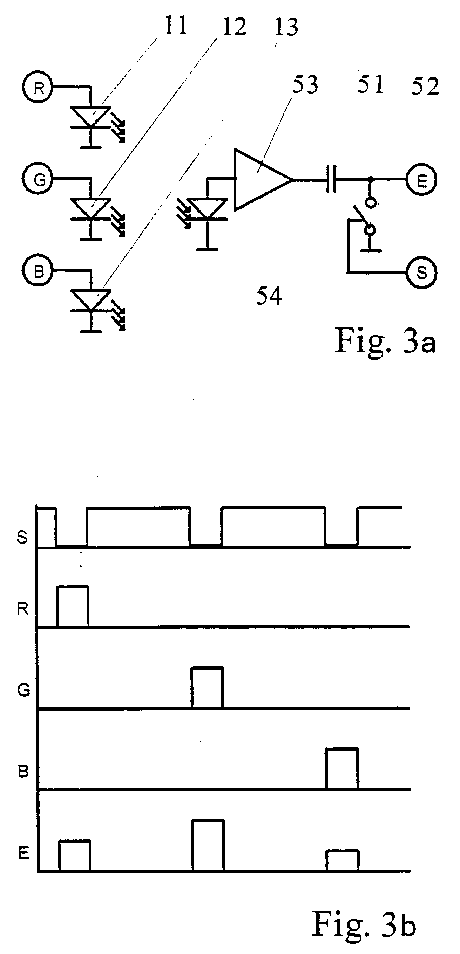

Im Empfangskanal 5, dessen elektronischer Teil in Fig. 3a und 3b gezeigt ist, wird vorzugsweise ein Silizium-Photoempfänger 54 verwendet, dessen Ausgangssignal auf den Eingang eines Transimpedanzwandlers in Form eines Operationsverstärkers 53 geleitet wird. Um das das Meßsignal verfälschende Umgebungslicht vom Meßlicht zu trennen, wird entsprechend Fig. 3a der Ausgang des Operationsverstärkers 53 zweckmäßig über einen Kondensator 51 auf einen Schalter 52 geführt, der im Falle der ausschließlichen Beleuchtung der Meßoberfläche 3 mit einer äußeren Strahlungsquelle geschlossen ist. Bei aktiver Beleuchtung der Meßoberfläche 3 mit einer der Lumineszenzdioden 11, 12 oder 13 wird gleichzeitig der Schalter 52 geöffnet, so daß nur die Signaländerung am Ausgang E auf einen nachgeschalteten A/D-Wandler wirksam wird. Ist die Beleuchtungsdauer hinreichend kurz gegenüber der Änderungsgeschwindigkeit des Umgebungslichtes, gelangt beim Meßvorgang nur die Differenz zum Umgebungslicht auf den Eingang des nachgeschalteten A/D-Wandlers, da der Kondensator 51 während des geschlossenen Zustandes des Schalters 52 auf diejenige Spannung aufgeladen ist, die durch das Umgebungslicht an der Ausgangsspannung des Operationsverstärkers 53 erzeugt wird. Dadurch wird z.B. selbst der Störeinfluß von niederfrequenten Strahlungsquellen, wie z.B. Leuchtstofflampen, eliminiert.

Diese Verfahrensweise hat zugleich den Vorteil, daß die Offsetspannung des Operationsverstärkers 53 und deren Drift keinen Einfluß auf das Meßergebnis haben, da deren Einflüsse durch diese Maßnahme, ebenso wie das Umgebungslicht, unterdrückt werden.

Weiterhin sind in Fig. 3a die Lichtquellen 1 als Halbleiterstrahlungsquellen dargestellt, wobei für den roten, grünen und blauen Spektralbereich Lumineszenzdioden 11, 12, und 13 eingesetzt sind. Fig. 3b zeigt die Zeitabläufe und Synchronisation der Beleuchtungsimpulse R, G und B, der Schaltimpulse S sowie der Meßimpulse E für Lumineszenzdioden 11, 12, 13 und Photoempfänger 54.

Um das senkrechte Aufsetzen des vorzugsweise in einem stabförmigen Meßkopf untergebrachten Meßaufbaus zu ermöglichen, ist an der Aufsatzfläche eine in Fig. 5 dargestellte Aufsetzhilfe angebracht. Diese Aufsetzhilfe kann aus mehreren Stößeln 62 bestehen, die beim ordnungsgemäßen Aufsetzen auf die Meßoberfläche 3 Kontakte 61 schließen, so daß der Meßvorgang ausgelöst bzw. bei während der Messung auftretender Verkippung abgebrochen wird, um fehlerhafte Meßwerte zu vermeiden.

Eine weitere Maßnahme zur Verbesserung der Eigenschaften der erfindungsgemäßen Anordnung ist die Einführung eines Referenzkanals für jede der Lichtquellen 1. Da den Lumineszenzdioden 11, 12 und 13 eine Änderung der Intensität in Abhängigkeit von den Umgebungseinflüssen immanent ist, die nur schwer über Stabilisierungsmaßnahmen kompensiert werden kann (die abgegebene Leistung einer roten Lumineszenzdiode kann beispielsweise um 0,5 %/K bei konstantem Strom driften), wird deren Intensität ständig überwacht und das Ergebnis durch simultane Aufnahme von Signalen des Photoempfängers 54 und eines Referenzdetektors 55 im Auswerterechner entsprechend kompensiert. Durch diese Maßnahme kann die in der Farbmessung allgemein übliche Neukalibrierung der Meßanordnung entfallen. Die Verschiebung der Wellenlängen der Lichtquellen 1 infolge von Umgebungseinflüssen und Alterung ist vernachlässigbar gering, so daß deren Berücksichtigung bei der Farbmessung entfallen kann.

Eine weitere Fortbildung der erfindungsgemäßen Anordnung ist die Erhöhung der Meßgenauigkeit durch Durchschnittsbildung aus mehreren Meßwerten des Photoempfängers 54. Voraussetzung für diese Verfahrensweise ist, daß die Meßwerte nicht korreliert sind. Dazu ist es notwendig, bei der impulsmäßigen Ansteuerung nach Einschalten der Lichtquellen 1 und Aufhebung der Klemmung frühestens nach einer bestimmten Zeit, die dem Kehrwert der Bandbreite des Empfangskanals 5 entspricht, den jeweiligen Meßwert am A/D-Wandler zu ermitteln. Dabei wird die Anstiegszeit der Intensität der Lumineszenzdioden 11, 12, 13 als hinreichend klein angenommen.

Ein geeigneter Strahler als blaue Luminiszenzdiode 11 ist - wie aus Fig. 1 ersichtlich - beispielsweise eine NLPB 300 der Firma Nichia Chemical Industries (Japan).

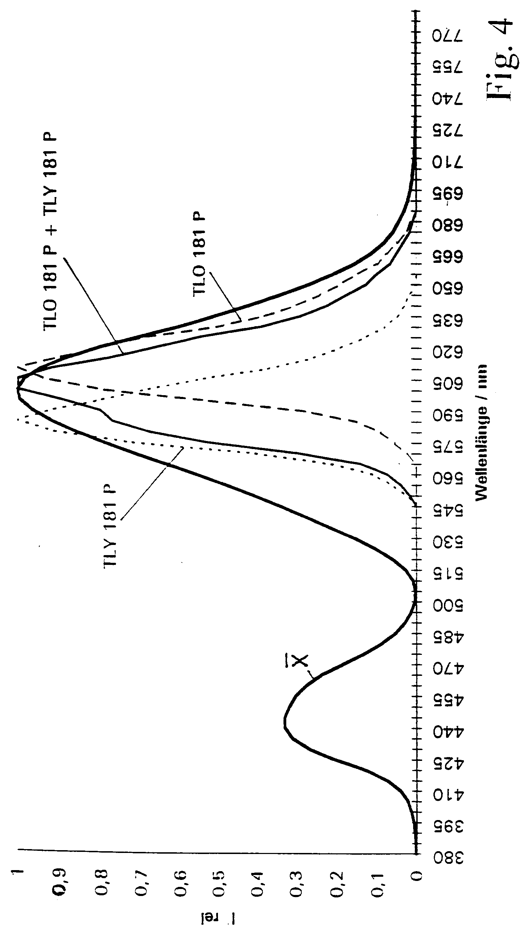

Wie aus Fig. 4 im Vergleich zwischen spektraler Abstrahlungscharakteristik des roten Strahlers TLO 181 P (der Fa. Toshiba, Japan) mit der entsprechenden Normspektralkurve $\bar{x}$ erkennbar ist, liegt hier die geforderte spektrale Übereinstimmung nicht vor. Deshalb wird für die fehlende Strahlung der rote Strahler TLY 181 P (des gleichen Herstellers) hinzugefügt. Für den Wellenlängenbereich von 410 bis 490 nm wird außerdem bei der Bewertung des roten Farbanteils ein entsprechender Anteil des Meßsignals des spektral richtig liegenden blauen Strahlers berücksichtigt. Die fehlende Bandbreite des roten Strahlers im langwelligen Bereich der Normspektralkurve $\bar{x}$ kann durch eine proportional stärkere Bewertung des Meßsignals beim Auswertevorgang berücksichtigt werden. Außerdem besteht die Möglichkeit der besseren spektralen Anpassung durch additive Verwendung mehrerer, spektral unterschiedlich emittierender Lichtquellen 1, wie ebenfalls in Fig. 4 unter Benutzung der Halbleiterstrahler TLY 181 P und TLO 181 P der Fa. Toshiba (Japan) dargestellt ist. Weiterhin läßt sich eine spektrale Anpassung durch Vorsetzen von Farbgläsern vor die Strahler realisieren. Beispielsweise kann man die Spektralverteilung der NLPB 300 durch Kombination mit einem Filter BG25 in den kurzwelligen Bereich verschieben. Somit können Spektralbereiche abgedeckt werden, für die es keinen geeigneten Strahler gibt.

Fig. 5 zeigt ein konstruktives Ausführungsbeispiel des vorgeschlagenen Meßaufbaues. Das Licht der Luminiszenzdioden 11, 12 und 13 wird in drei Faserbündel eines faseroptischen Bauelements 2 eingekoppelt, das als optischer Querschittswandler fungiert. Dieses faseroptische Bauelement 2 wird zum Beispiel aus Quarz-Quarz-Fasern HCG-MO365T-10 der Firma Ensign-Bickford Optics Company (USA) oder aus Fasern mit noch geringer Apertur gebildet, um die Meßoberfläche 3 unter einem Öffnungswinkel ≦ 20° zu beleuchten. Die Faserbündel werden zusammengeführt und bilden auf der Ausgangsseite eine ringförmige Anordnung 21. Günstigerweise bilden die Faserenden einen einlagigen Ring um den Empfangskanal herum, wobei sich die Faserenden berühren und auf einer Kegelstumpfmantelfläche liegen. Zur Erzielung einer guten Homogenität der Beleuchtung der Meßoberfläche 3 für alle drei Spektralanteile stammen die einzelnen Fasern jeweils abwechselnd aus den drei Faserbündeln (z.B. rot, grün, blau, rot, grün, ...). Die Einstrahlung auf die Meßoberfläche 3 soll wegen der schon erwähnten Vermeidung des Glanzeinflusses auf das Meßergebnis vorzugsweise unter einem Winkel von 45° zur Flächennormalen erfolgen.

Da man den Meßkopf auch mit den schräg zur Achse liegenden Fasern günstigerweise auf der Austrittsseite plan arbeitet, müssen die einzelnen Faserachsen in einem derartigen Winkel zur Flächennormalen der Meßoberfläche 3 liegen, daß sich infolge der Anwendung des Brechungsgesetzes unter Berücksichtigung der Kernbrechzahl der Fasern und der Umgebungsbrechzahl ein Einfallswinkel des Lichtes bezüglich der Normalen von etwa 45° ergibt. Der Winkel der Fasern zur Normalen beträgt bei Verwendung von Quarzfasern ca. 29°. Unter dieser Voraussetzung erfolgt die Beleuchtung der Meßoberfläche 3 mit einem plan abschließenden Meßkopf unter einem Winkel von 45° (+ Faserapertur). Durch die Variation der geometrischen Verhältnisse im Beleuchtungskanal und im Empfangskanal 5 ist die Größe des Meßflecks 44 dem jeweiligen konkreten Meßproblem anpaßbar. Beispielsweise bestimmt der Durchmesser des Ringes der Faserenden 21 des faseroptischen Bauelements 2 die Größe des ausgeleuchteten Gebietes der Meßoberfläche 3 und die erzielbare Beleuchtungsstärke im Meßfleck 44. Der Abstand zur Meßoberfläche 3 kann durch ein hier nicht gezeigtes Distanzstück eingestellt werden. Der Durchmesser des Leuchtfleckes sollte geringfügig über dem gewünschten Meßdurchmesser liegen.

Das von der Meßoberfläche 3 remittierte Licht wird durch eine geeignete Linse 41 auf einen Photoempfänger 54 fokussiert, der sich günstigerweise im Abstand der einfachen Brennweite von der Linse 41 befindet. Dadurch wird die Messung der Abstrahlung in einem Winkel von 0° (+ Öffnungswinkel) erreicht. Durch die Wahl der Linsenbrennweite kann in Verbindung mit der Empfängergröße der Winkelbereich festgelegt werden, aus dem die Strahlung im Empfangskanal 5 registriert wird. Die Größe des Meßfleckes 44 läßt sich durch den Durchmesser der Objektblende 42 festlegen. Im Ausführungsbeispiel wird eine Meßfleckgröße von 5 mm bei einem beleuchteten Durchmesser von 5,5 mm angenommen. Zur Kompensation von alterungs- oder temperaturbedingten Schwankungen der Intensität der Lumineszenzdioden 11, 12 und 13 wird jeweils ein geringer Leistungsanteil über entsprechende Fasern 22 auf einen Referenzempfänger 55 geleitet. Eine Glasplatte 43 dient als planer Abschluß des Empfangskanals.

Drei gleichmäßig angeordnete Stößel 62 dienen in Verbindung mit je einem zugeordneten Schalter 61 mit geringer Schalthysterese und einer Auswertelogik dazu, den Meßvorgang bei exakt senkrechtem Aufsetzen auf die Meßoberfläche 3 auszulösen. Nur wenn alle drei Schalter 61 geschlossen sind, erfolgt ein gültiger Meßvorgang. So wird bei Veränderung einer Stößelposition während der Messung der Meßvorgang abgebrochen und dies kann durch ein akustisches Signal angezeigt werden.

Als Empfänger wird eine Si-Photodiode 54 benutzt, die wegen der Notwendigkeit einer hohen dynamischen Linearität im Kurzschlußbetrieb arbeitet. Damit ist ein sehr großer Dynamikbereich des remittierten Lichtes meßbar.

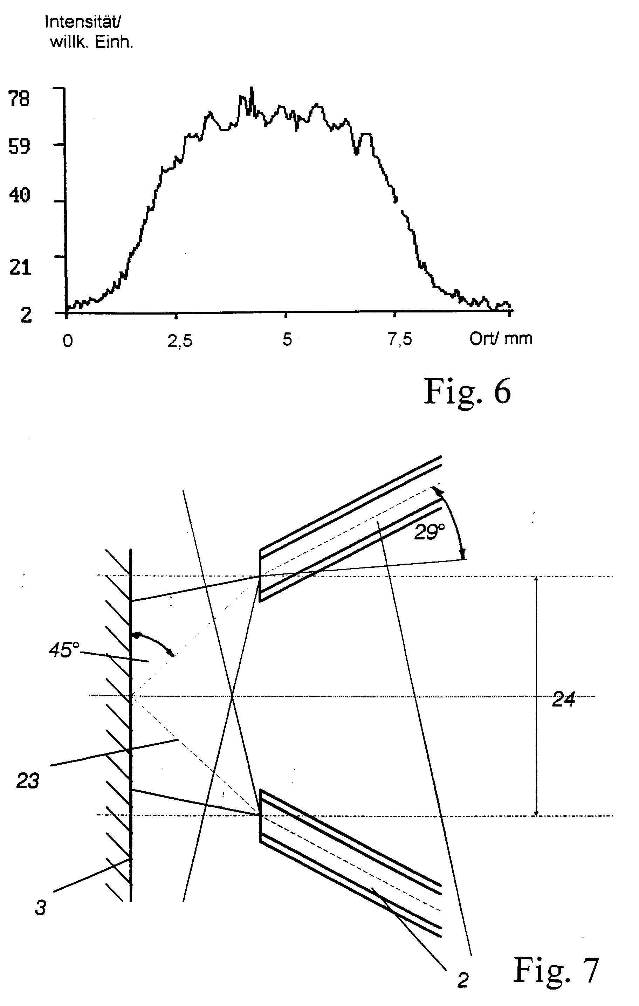

Fig. 6 zeigt den Intensitätsverlauf des Beleuchtungsfleckes für die Beleuchtung im grünen Spektralbereich bei Durchfahren eines willkürlichen Durchmessers des Meßfleckes 44. Durch die allseitige und symmetrische Einstrahlung des Meßlichtes ergibt sich eine relativ homogene Verteilung, die zu einem geringen Fehler bei der Farbmessung beiträgt. Dabei erweist es sich als günstig, die Geometrie des Meßkopfes derart zu wählen, daß sich die von gegenüberliegenden Faserendflächen 21 ausgehenden Strahlkegel wesentlich überlappen, wie es in Fig. 7 dargestellt ist.

Die schrägen Faserendflächen 21 des Bauelements 2 ergeben unsymmetrische Austrittskegel des Lichtes. Für eine annähernd homogene Bestrahlung der Meßoberfläche 3 erweist es sich als günstig, wenn sich die gebrochenen Achsstrahlen 23 der Faserbündel im Mittelpunkt des Meßfleckes treffen. Dies kann durch geeignete Wahl des Kreisdurchmessers 24 der ausgangsseitigen Faserendflächen 21 erreicht werden.

Das Empfängersignal wird mit einem A/D-Wandler digitalisiert und einem Mikrorechner zugeführt, mit dem Normfarbwerte (siehe z.B. H.G. Völz: Industrielle Farbprüfung, VCH Verlagsgesellschaft Weinheim, 1990) errechnet werden. Für eine exakte Messung kann dafür die klassische Transformation, die beispielsweise für den Spektralwertanteil X

$$X = k_1 \cdot r + k_2 \cdot g + k_3 \cdot b$$

lautet, angewendet werden. Diese Transformation ist jedoch nur für eine Farbe genau, bei anderen Farben müssen andere Koeffizienten $k_1$ bis $k_3$ verwendet wer-

den. Um die Bestimmung und Speicherung einer solch riesigen Menge von Koeffizienten zu umgehen, wird erfindungsgemäß ein Anlernprozeß ausgenutzt, um ein lineares Gleichungssystem mit geeigneten Koeffizienten aufzustellen, in das die Spektralwertanteile X, Y, Z von zertifizierten Farbmustern (RAL-Farben, BCR-Normkacheln etc.) als Ergebnisgrößen eingehen. Bei im wesentlichen gleichmäßiger Verteilung der verwendeten Farbmuster über den Farbraum erhält man eine relativ gleichverteilte Anzahl von Stützstellen zur Aufstellung des Gleichungssystems und Bestimmung der Koeffizienten. Bei ausreichender Übereinstimmung von verschiedenen Exemplaren eines erfindungsgemäßen Gerätes, insbesondere einer annähernden Übereinstimmung der spektralen Verteilungsfunktionen der jeweiligen Lichtquellen 1, sind die Koeffizienten für jedes Gerät gleich und müssen nur einmal ermittelt werden. Als vorteilhafte Lösungen zur Bestimmung des vollständigen Gleichungssystems haben sich die nachfolgenden Methoden erwiesen.

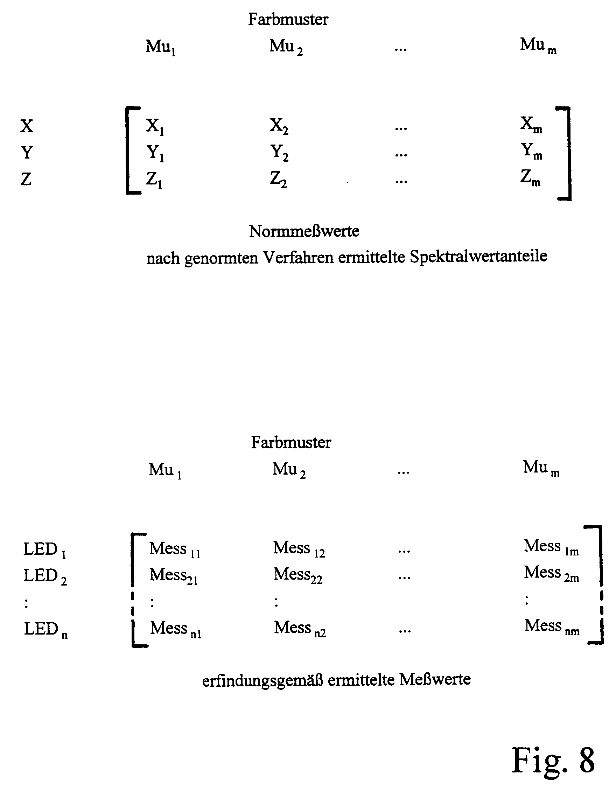

Zum einen läßt sich die Methode der mehrfachen linearen Regression, im speziellen das Verfahren der kleinsten Fehlerquadrate, verwenden. Zunächst werden die Farbmuster $Mu_1$... $Mu_m$ mit einer etwa gleichmäßigen Verteilung im Farbraum herkömmlich (z.B. nach DIN) bezüglich der Spektralwertanteile X, Y, Z vermessen. Man erhält eine Matrix, wie sie in Fig. 8 oben dargestellt ist. Die untere Matrix enthält die Empfängersignale bei Vorlage der gleichen Farbmuster unter einzelner Beleuchtung mit den erfindungsgemäßen Lichtquellen 1, deren spektrale Unterschiedlichkeit durch $LED_1$ ... $LED_n$ bezeichnet wurde. Mit Hilfe der Methode der kleinsten Fehlerquadrate werden, für die drei Spektralwertanteile X, Y, Z getrennt, Koeffizienten für die Empfängersignale sowie ein Offsetwert ermittelt, um mit den folgenden Formeln die Meßergebnisse $MessX_j$, $MessY_j$ und $MessZ_j$ zu bestimmen.

$$MessX_j = \left( \sum_{i=1}^{n} k_i \cdot Mess_{ij} \right) + b_x$$

$$MessY_j = \left( \sum_{i=1}^{n} l_i \cdot Mess_{ij} \right) + b_y$$

$$MessZ_j = \left( \sum_{i=1}^{n} m_i \cdot Mess_{ij} \right) + b_z$$

Die jeweiligen Werte für $k_i$, $l_i$, $m_i$, $b_x$, $b_y$ und $b_z$ erhält man, indem man die Meßwerte $Mess_{nm}$...$Mess_{11}$ der unteren Matrix in Fig. 8 mit den jeweiligen Zeilen $X_1$...$X_m$...$Y_1$...$Y_m$ und $Z_1$...$Z_m$ entsprechend den folgenden Bedingungen verknüpft und minimiert werden:

$$\left( \sum_{j=1}^{m} \left( \left( \sum_{i=1}^{n} k_i \cdot Mess_{ij} \right) + b_x \right) - X_j \right)^2 = Min.$$

$$\left( \sum_{j=1}^{m} \left( \left( \sum_{i=1}^{n} l_i \cdot Mess_{ij} \right) + b_y \right) - Y_j \right)^2 = Min.$$

$$\left( \sum_{j=1}^{m} \left( \left( \sum_{i=1}^{n} m_i \cdot Mess_{ij} \right) + b_z \right) - Z_j \right)^2 = Min.$$

Diese Werte werden in der Auswerteeinheit gespeichert und dienen dann bei jeder realen Messung zur Berechnung der Spektralwertanteile X, Y, Z.

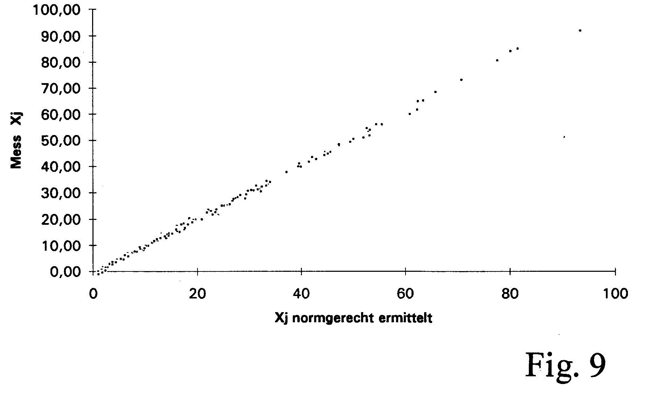

In Fig. 9 ist als Beispiel für die erreichbare Genauigkeit die Korrelation zwischen den zertifizierten Farbmustern (Abszisse) und den durch die erfindungsgemäße Anordnung (unter Verwendung von durch lineare Regression ermittelten Koeffizienten) bestimmten Werten für den Spektralwertanteil X (Ordinate) dargestellt. Bei den zur Prüfung aus der Farbtafel RAL-F1 (RAL-Katalog 840) handelt es sich um 190 Vorlagen, deren Farbdaten bei Normbedingungen (Beleuchtung mit D65 und 0/45°-Meßgeometrie sowie einen Betrachtungswinkel von 10°) ermittelt wurden.

Die Regressionskoeffizienten von 0,9994, 0,9903 und 0,9995 für X, Y und Z zeigen gute Korrelation, die zwischen den nach Normbedingungen und den nach der erfindungsgemäßen Apparatur erhaltenen Meßergebnissen besteht. Fig. 9 zeigt diese Korrelation für den Spektralwertanteil X, die für Y und Z qualitativ gleich aussieht.

Alternativ zur Regressionsmethode wird erfindungsgemäß zur Objektivierung des letztlich subjektiven menschlichen Sinnempfindens die Bewertung der Meßinformation über ein neuronales Netz vorgenommen. Damit werden Berechnungskoeffizienten $k_i$ ermittelt, ebenfalls in der Auswerteinheit gespeichert und stehen bei jeder Messung zur Berechnung der Spektralwertanteile X, Y, Z zur Verfügung.

Erfindungsgemäß werden für die drei Spektralwertanteile X, Y, Z drei unterschiedliche Netze verwendet, die mit jeweils mindestens drei Eingangszellen für die Meßwerte der unterschiedlich ansteuerbaren Spektralbereiche (z.B. blau, grün, rot) versehen sind. Zwischen diesen Eingangszellen und der Ausgangszelle befindet sich mindestens eine versteckte Hiddenschicht mit einer geeigneten Anzahl von Zellen.

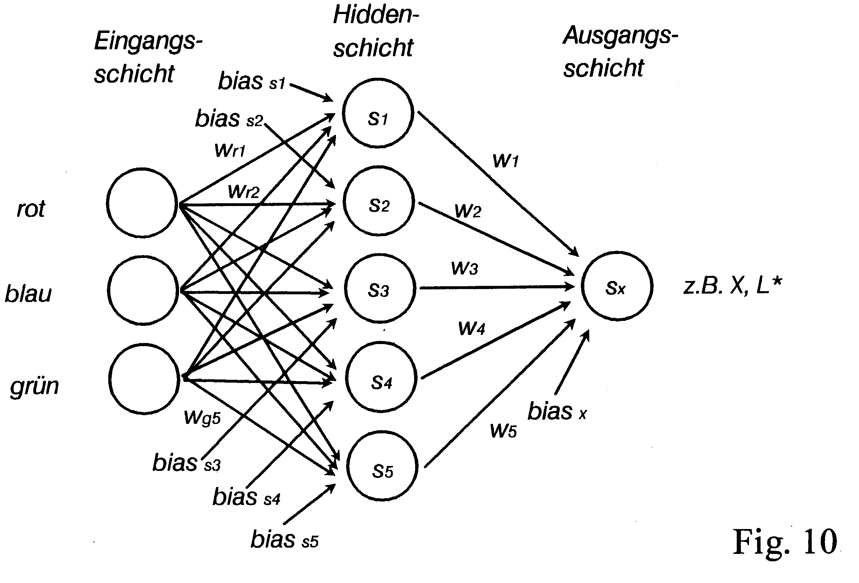

Fig. 10 zeigt die beispielhafte Struktur eines verwendbaren neuronalen Netzes zur Ermittlung der Koeffizienten für einen Spektralwertanteil X. Es wird ein Backpropagationmodell mit Bias angewendet. Als Übertragungsfunktion kann beispielsweise eine lineare Funktion mit Grenzwert dienen. Das neuronale Netz wird aus einer Eingangsschicht mit vorzugsweise drei Eingangsstellen für die drei Meßwerte der roten, grünen und blauen Spektralbereiche, einer Hiddenschicht mit

beispielsweise fünf Hiddenelementen $S_1$ bis $S_5$ und einer Ausgangsschicht mit einer Ausgabezelle für Spektralwertanteil X gebildet. Gleiche Strukturen werden für die Spektralwertanteile Y und Z verwendet.

Die Farbmuster für das Training des neuronalen Netzes sollten gleichmäßig im Farbraum [z.B. im Raum (L*;a*;b*)] verteilt sein. Die Spektralwertanteile X, Y, Z der Farbmuster sind wiederum mit zertifizierten Verfahren zuvor vermessen worden und damit für den Anlernprozeß bekannt. Die durch das Musteranlernen ermittelten Verbindungsgewichte $W_{kl}$ sowie die ebenfalls ermittelten Biaswerte s1 bis s5 für die versteckten Hiddenelemente $S_1$ bis $S_5$ sowie die Ausgabezellen werden in der Auswerteeinheit gespeichert und zur Berechnung der Spektralwertanteile X, Y und Z verwendet.

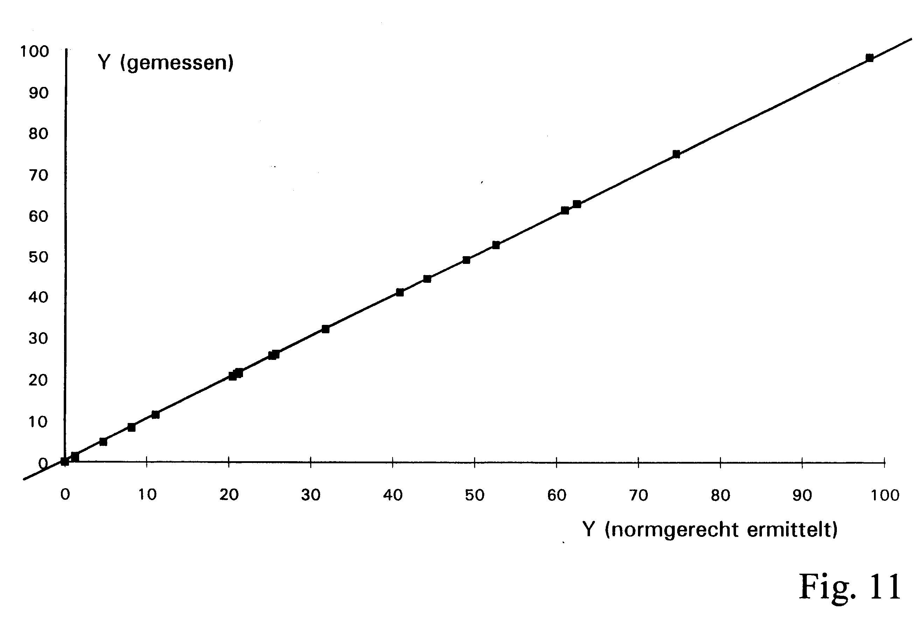

In Fig. 11 ist als Beispiel für die erreichbare Genauigkeit die Korrelation zwischen den angelernten zertifizierten Farbmustern (Abszisse) und den durch die erfindungsgemäße Anordnung (unter Verwendung der mit dem neuronalen Netz ermittelten Koeffizienten) bestimmten Werten für den Spektralwert Y (Ordinate) dargestellt. Es handelt sich um die gleiche Norm-Meßmethode wie für Fig. 9, als Farbmuster wurden in diesem Fall BCR-Normkacheln verwendet. Man erkennt, daß die Messung der Spektralwertanteile X, Y und Z von nicht angelernten Meßoberflächen 3 zu relativ geringen Abweichungen von den unter Normbedingungen ermittelten Farbwerten führt.

Damit stellt die erfindungsgemäße Anordnung bei beliebiger Wahl ihrer konkreten Auswertegleichungen durch den Hersteller eine anwenderfreundliche Vorrichtung dar, die einer normgerechten Farbmessung sehr nahe kommt, ohne vom Anwender die Einhaltung der Normbedingungen zu fordern.

**Patentansprüche**

1. Anordnung zur Messung von Farben nichtselbstleuchtender Objekte mit mindestens drei sequentiell betriebenen Lichtquellen, die unterschiedliche spektrale Abstrahlungscharakteristik im sichtbaren Spektralbereich aufweisen und deren Licht auf eine Meßoberfläche eingestrahlt wird, und einem Empfangskanal zur Messung des von der Meßoberfläche remittierten Lichtes, wobei eingestrahltes und remittiertes Licht eine glanzunterdrückende Meßgeometrie aufweisen, dadurch gekennzeichnet, daß

   - die spektralen Abstrahlungscharakteristiken der Lichtquellen (1) lückenlos den sichtbaren Spektralbereich ausfüllen,
   - die Lichtquellen (1) spektrale Verteilungsfunktionen aufweisen, die durch geeignete spektrale Verknüpfungsmaßnahmen zur Anpassung an die Normspektralfunktion geeignet sind,

   - der Empfangskanal (5) zur Aufnahme von Remissionswerten mit einer Auswerteeinheit in Verbindung steht und mit der Lichtquellenansteuerung so synchronisiert ist, daß für jeden nach dem trichromatischen Prinzip erforderlichen Farbwert mindestens ein Remissionswert aufgenommen wird,
   - in der Auswerteeinheit zur Auswertung der gemessenen Remissionswerte eine Anzahl linearer Gleichungen vorhanden ist, deren Koeffizienten in einem Anlernprozeß durch die Anwendung von Farbmustern erstellt sind, wobei die von den Farbmustern bekannten, normgerecht ermittelten Farbkoordinaten mit den von den Farbmustern aufgenommenen Remissionswerten verknüpft werden und der Anlernprozeß für die einzelnen Farbkoordinaten (X, Y, Z) separat erfolgt.

2. Anordnung nach Anspruch 1, dadurch gekennzeichnet,
   daß zur Anpassung an die Normspektralfunktionen Lichtquellen (1) mit Farbgläsern kombiniert sind.

3. Anordnung nach Anspruch 1, dadurch gekennzeichnet,
   daß zur Anpassung an die Normspektralfunktionen mehrere, spektral verschiedene Lichtquellen (1) in additiver Kombination zusammenschaltbar sind.

4. Anordnung nach Anspruch 1, dadurch gekennzeichnet,
   daß zur Anpassung an die Normspektralfunktionen Remissionswerte von nacheinander angesteuerten, spektral verschiedenen Lichtquellen (1) in der Auswerteeinheit unterschiedlich gewichtet in verschiedene lineare Gleichungen eingebbar sind.

5. Anordnung nach Anspruch 1, dadurch gekennzeichnet,
   daß Beleuchtungskanal und Empfangskanal (5) zueinander im Winkelverhältnis von 45° und 0° bezüglich der mittleren Flächennormalen der Meßoberfläche (3) stehen.

6. Anordnung nach Anspruch 1, dadurch gekennzeichnet,
   daß ein faseroptisches Bauelement (2) zur Führung des Lichtes der verschiedenen Lichtquellen (1) zu einem Meßfleck (44) auf der Meßoberfläche (3) vorhanden ist, wobei die Faserenden (21) so angeordnet sind, daß das aus unterschiedlichen Faserenden (21) austretende Licht ein und derselben Lichtquelle (1) im Meßfleck (44) eine homogene Ausleuchtung erzeugt.

7. Anordnung nach Anspruch 6, dadurch gekennzeichnet,
   daß das faseroptische Bauelement (2) aus Lichtwellenleitern (22) mit geringer Apertur, vorzugsweise < 0,17 besteht.

8. Anordnung nach Anspruch 6, dadurch gekennzeichnet,
daß das faseroptische Bauelement (2) so viele Fasern aufweist, daß von jeder Lichtquelle (1) mindestens drei Fasern auf den Meßfleck (44) gerichtet sind.

9. Anordnung nach Anspruch 8, dadurch gekennzeichnet,
daß die Faserenden (21) des faseroptischen Bauelementes (2) in Form eines Ringes angeordnet und die von verschiedenen Lichtquellen (1) kommenden Fasern abwechselnd in wiederkehrender Folge aufgereiht sind.

10. Anordnung nach Anspruch 1, dadurch gekennzeichnet,
daß der Empfangskanal (5) aus einem lichtsammelnden optischen System (4), im einfachsten Fall einer Linse (41), und einem Photoempfänger (54) gebildet wird, wobei sich der Photoempfänger (54) vorzugsweise im Brennpunkt des optischen Systems (4) befindet.

11. Anordnung nach Anspruch 10, dadurch gekennzeichnet,
daß der Photoempfänger (54)

- mittels Kurzschlußbetrieb linear ausgesteuert ist und
- mit einem nachfolgenden Operationsverstärker (53) in Verbindung steht, der auf einen Signalwert ohne Meßbeleuchtung geklemmt ist.

12. Anordnung nach Anspruch 10, dadurch gekennzeichnet,
daß mehrere Signalwerte des Photoempfängers (54) bei Beleuchtung der Meßoberfläche (3) mit derselben Lichtquelle (1) durch Mittelwertbildung einen Meßwert zur Eingabe in das Gleichungssystem der Auswerteeinheit darstellen.

13. Anordnung nach Anspruch 1, dadurch gekennzeichnet,
daß Beleuchtungskanal und Empfangskanal (5) in einem stabförmigen Meßkopf untergebracht sind, wobei der Meßkopf ein Hilfsmittel zur Gewährleistung des senkrechten Aufsetzens des Meßkopfes besitzt, welches aus mindestens drei im gleichen Abstand zueinander um den Meßfleck (44) des Empfangskanals (5) angeordneten Kontakten (61) und Stößeln (62) besteht, die bei gleichmäßiger Betätigung den Meßvorgang auslösen oder bei Verkippung abbrechen.

14. Anordnung nach Anspruch 1, dadurch gekennzeichnet,
daß ein aus der Strahlung der Lichtquellen (1) ausgekoppelter Referenzkanal zur Kompensation von Intensitätsveränderungen durch Alterungs- und Umgebungseinflüsse vorhanden ist, wobei Veränderungen des Ausgangswertes eines Referenzdetektors (55) bei der Auswertung der Meßwerte berücksichtigt werden.

15. Vorrichtung nach Anspruch 1, dadurch gekennzeichnet,
daß die Koeffizienten der linearen Gleichungen durch mehrfache lineare Regression, vorzugsweise durch die Methode der kleinsten Fehlerquadrate, bestimmbar sind.

16. Anordnung nach Anspruch 15, dadurch gekennzeichnet,
daß unter Beibehaltung der gleichen Koeffizienten und Offsetwerte, die durch mehrfache lineare Regression ermittelt werden, andere Meßgrößen von Meßoberflächen (3), die selbst oder auf Indikatorvorlagen Farbänderungen hervorrufen, verwendet werden.

17. Vorrichtung nach Anspruch 1, dadurch gekennzeichnet,
daß die Koeffizienten der linearen Gleichungen durch neuronale Netze bestimmbar sind, wobei das neuronale Netz für jede Farbkoordinate (X, Y, Z) jeweils

. eine Eingangsschicht mit mindestens drei Eingangszellen zur Aufnahme aller gemessenen spektral unterschiedlichen Remissionswerte von genormten Musterflächen
. wenigstens eine Hiddenschicht mit mindestens drei Hiddenelementen $(S_i)$ sowie
. eine Ausgangsschicht mit einer Zelle $(S_X, S_Y, S_Z)$ zur Ausgabe eines Spektralwertanteils (X, Y, Z) enthält.

18. Vorrichtung nach Anspruch 17, dadurch gekennzeichnet,
daß die Bestimmung der Koeffizienten des linearen Gleichungssystems durch Anlernen von zertifizierten Farbmustern zur Erzeugung von Wichtungskoeffizienten und Biaswerten im neuronalen Netz erfolgt.

19. Anordnung nach Anspruch 18, dadurch gekennzeichnet,
daß unter Beibehaltung der gleichen Wichtungskoeffizienten und Biaswerte der neuronalen Netze andere Meßgrößen von Meßoberflächen (3), die selbst oder auf Indikatorvorlagen Farbänderungen hervorrufen, verwendet werden.

**20.** Anordnung nach Anspruch 18, dadurch gekennzeichnet,
daß durch Anlernen neuer Wichtungskoeffizienten und Biaswerte die Nichtlinearität der Farbindikation eines Primärprozesses bzw. einer Primärgröße in das neuronale Netz implizierbar ist.

Fig. 1

Fig. 2

Fig. 3a

Fig. 3b

Fig. 4

Fig. 5

Fig. 6

Fig. 7

Farbmuster

| | $Mu_1$ | $Mu_2$ | ... | $Mu_m$ |
|---|---|---|---|---|
| $X$ | $X_1$ | $X_2$ | ... | $X_m$ |
| $Y$ | $Y_1$ | $Y_2$ | ... | $Y_m$ |
| $Z$ | $Z_1$ | $Z_2$ | ... | $Z_m$ |

Normmeßwerte

nach genormten Verfahren ermittelte Spektralwertanteile

Farbmuster

| | $Mu_1$ | $Mu_2$ | ... | $Mu_m$ |
|---|---|---|---|---|
| $LED_1$ | $Mess_{11}$ | $Mess_{12}$ | ... | $Mess_{1m}$ |
| $LED_2$ | $Mess_{21}$ | $Mess_{22}$ | ... | $Mess_{2m}$ |
| : | : | : | | : |
| $LED_n$ | $Mess_{n1}$ | $Mess_{n2}$ | ... | $Mess_{nm}$ |

erfindungsgemäß ermittelte Meßwerte

Fig. 8

Fig. 9

Fig. 10

Ausgangs-schicht

z.B. X, L*

$S_x$

bias $_x$

$w_1$ $w_2$ $w_3$ $w_4$ $w_5$

Hidden-schicht

$S_1$ $S_2$ $S_3$ $S_4$ $S_5$

bias $_{s1}$
bias $_{s2}$
$w_{r1}$
$w_{r2}$
bias $_{s3}$
bias $_{s4}$
bias $_{s5}$
$w_{g5}$

Eingangs-schicht

rot

blau

grün

Fig. 11

EP 0 737 850 A2